**Europäisches Patentamt**

**European Patent Office**

**Office européen des brevets**

(11) Publication number: **0 210 766**
**B1**

# EUROPEAN PATENT SPECIFICATION

(45) Date of publication of patent specification: **27.12.90**

(51) Int. Cl.⁵: **F 02 P 5/04, F 02 D 41/14**

(21) Application number: **86305221.3**

(22) Date of filing: **07.07.86**

(54) Adaptive control system for an internal combustion engine.

(30) Priority: **23.07.85 GB 8518593**

(43) Date of publication of application:
**04.02.87 Bulletin 87/06**

(45) Publication of the grant of the patent:
**27.12.90 Bulletin 90/52**

(84) Designated Contracting States:
**BE DE FR GB IT NL SE**

(56) References cited:
GB-A-1 543 379
GB-A-2 024 462
GB-A-2 034 930
US-A-4 181 944
US-A-4 328 779
US-A-4 357 662
US-A-4 375 668
US-A-4 403 584
US-A-4 478 185
US-A-4 502 442

(73) Proprietor: **LUCAS INDUSTRIES public limited company**
**Great King Street**
**Birmingham, B19 2XF West Midlands (GB)**

(72) Inventor: **Wakeman, Anthony Claude**
**10 Romsley Hill Grange Farley Lane Romsley**
**Bromsgrove Hereford Worcester B62 0LN (GB)**
Inventor: **Holmes, Michael**
**75 Featherstone Road**
**Kings Heath Birmingham B14 6BD (GB)**
Inventor: **Ironside, John Michael**
**17 Greenmeadow Road**
**Birmingham B29 4DD (GB)**
Inventor: **Barnard, Simon Cary**
**St. Andrews Upper Ladyes Hill**
**Kenilworth Warwickshire CV8 2FB (GB)**

(74) Representative: **Prutton, Roger et al**
**MARKS & CLERK Alpha Tower Suffolk Street**
**Queensway**
**Birmingham B1 1TT (GB)**

Courier Press, Leamington Spa, England.

## Description

This invention relates to an adaptive control system for an internal combustion engine and further relates to a method of operating an internal combustion engine.

In view of the increasing stringency of emission control regulations in various countries in recent years, many attempts have been made to improve fuel supply systems of engines to reduce noxious exhaust emissions whilst maintaing good engine driveability.

In one approach to reduce noxious emissions, fuel and air are supplied to the cylinders in stoichiometric proportions and the pollutants are removed by using a catalyst. This approach suffers from the disadvantages that the catalyst is liable to deteriorate with use and running an engine with a stoichiometric mixture results in a relatively high fuel consumption.

In another approach, known as the "lean-burn" approach, a mixture containing excess air is supplied to the cylinders. Production of pollutants in the form of carbon monoxide and oxides of nitrogen is much less than with the stoichiometric approach. An arrangement using this approach is less prone to deterioration with time than an arrangement using the stoichiometric approach and this approach results in an improvement in fuel consumption in comparison with the stoichiometric approach.

The formation of oxides of nitrogen is associated with high temperatures within the combustion chamber. The highest temperatures occur with mixtures whose composition is close to stoichiometric. Under these conditions, there is little free oxygen to participate in a formation of oxides of nitrogen. Therefore, the rate of formation of oxides of nitrogen is greatest with mixtures containing some excess air. Formation of oxides of nitrogen is reduced if peak temperature during combustion is reduced by diluting the mixture either with excess air or with exhaust gas or by water injection. The temperature may also be reduced by reducing the compression ratio or retarding ignition timing but these approaches lead to increased fuel consumption.

In a combustion chamber, flame propagation after ignition occurs at a finite speed. It has been found that maximum efficiency occurs when the peak pressures are generated approximately 5° to 15° after a piston has passed the top dead centre position. In order to achieve this, ignition occurs before the piston reaches top dead centre.

As the mixture is made progressively leaner, flame speed falls and ignition must be advanced progressively to maintain maximum efficiency. With very lean mixtures, or with high levels of exhaust gas recirculation, the flame speed becomes very low and ignition timing is very advanced. Consequently, the temperatures and pressures of the mixture at the moment of ignition are low and flame propagation is also low. Under these conditions, small variations in mixture composition and turbulence can lead to large variations in the time required to burn the mixture and these variations in cylinder pressure from cycle to cycle increase engine roughness.

Consequently, it is necessary to control the mixture composition between a fast burning limit beyond which the generation of oxides of nitrogen exceeds a desirable level and a slow burning limit beyond which engine roughness becomes unacceptable or misfires occur. In practice, there is a narrow window of acceptable mixture composition between the two limits and this mixture composition is associated with an optimum ignition timing.

Modern systems for controlling ignition timing and fuel composition in an internal combustion engine make use of digital "maps". These maps comprise memories pre-programmed with data relating to ignition timing and fuel composition for a multiplicity of combinations of values of two different engine operating parameters such as engine speed and manifold pressure. These maps represent very complex surfaces which are unobtainable using mechanical cams or simple electronic function generators and so they provide a great improvement over the earlier arrangements. However, they do not provide a completely adequate answer to emission and efficiency problems since there are many variables which cannot be taken into account such as fuel composition and volatility, the effects of deposits on the engine cylinder head which in turn affect the flame speed, and changes in the accuracy of the operation of the equipment which controls the fuel mixture, and variations in ignition energy and spark gap.

Various closed loop systems have been proposed to overcome these variable factors.

One such closed loop system uses an exhaust gas oxygen sensor. This system can compensate for variations in fuel composition and for variations in the air:fuel ratio in the mixture, but it cannot compensate for variations in compression ratio or for variations in the amount of exhaust gas recirculated where exhaust gas is used to dilute the mixture.

Another system uses a cylinder pressure sensor which can detect the position of the crankshaft at which peak pressure occurs. As the position at which peak pressure occurs is related to flame speed, this system can be used to control the generation of oxides of nitrogen. Unfortunately, presently known cylinder pressure sensors cannot meet the requirements of low cost and reliability.

Another system uses a flame front ionisation sensor to measure the time taken for the flame to traverse the cylinder head and thereby measure flame speed directly. The sensor has to be positioned carefully and this reduces the freedom to design the shape of the cylinder head for low emissions and good fuel consumption.

In an article entitled "Electronic Spark Timing Control for Motor Vehicles" by Paul H. Schweitzer and Thomas W. Collins, published by The Society of Automotive Engineers as paper 780655, and also in U.S. Patent 4026251, there is described a system for optimising ignition timing. In this system, small perturbations are superimposed on the ignition timing and the resulting changes in engine speed are used to determine the differential or slope of engine speed with respect to ignition timing. The ignition timing is then adjusted until the slope is zero.

Although this system results in optimum ignition timing and, consequently, optimum engine output torque, for the prevailing fuel mixture, it does not compensate for errors in mixture composition. For example, it does not compensate for an error in mixture composition which results in excessive generation of oxides of nitrogen.

Accordingly, it is an object of this invention to provide a new or improved method of operating an internal combustion engine and also a new or improved adaptive control system for an internal combustion engine in which the above-mentioned problems are overcome or reduced.

According to one aspect of this invention there is provided a method of controlling an internal combustion engine having two control inputs both of which affect one parameter of engine output, said method comprising periodically perturbing one of said inputs about a base value which is established in accordance with the engine operating conditions, monitoring said engine output, determining the slope of engine output with respect to said one input, and controlling the other input so as to obtain a desired value of said slope.

Preferably, the desired value of said slope is established continuously as a function of the operating conditions.

Preferably, said one input is a control input to an ignition timing control device and said other input is a control input to a mixture composition control device.

The applicants have found that ignition timing and mixture composition are related in the following way. For specified engine operating conditions, such as a specified value of engine speed and a specified value of manifold pressure, mixture composition is defined by a particular value of ignition timing and a particular value of the slope of engine output with respect to ignition timing. The applicants have also found that, whilst mixture composition is liable to the variations outlined above, accuracy in ignition timing is normally well maintained. Thus, if ignition timing is specified for each combination of operating conditions, and the mixture composition is adjusted so as to achieve a desired value of the slope of engine output with respect to ignition timing, the desired fuelling will be achieved. Thus, the present invention provides an extremely convenient way of compensating for errors in fuelling.

Normally, the desired value of the slope is zero as this value results in maximum torque output. However, under certain operating conditions, it may be desirable to select a value other than zero. For example, under idling conditions, the ignition angle is usually retarded from the position for optimum torque output so as to reduce further the emissions of unburnt hydrocarbons.

According to another aspect of this invention there is provided an adaptive control system for an internal combustion engine having two control inputs both of which affect one parameter of engine output, said system comprising means for establishing a base value for one of said inputs as a function of engine operating conditions, means for periodically perturbing said one input about said base value, means for monitoring said engine output, means for determining the slope of engine output with respect to said one input, and means for controlling the other input so as to obtain a desired value of said slope.

Although the invention is particularly applicable to spark ignition petrol engines and the illustrative examples described hereinafter all relate to such engines, the invention is also applicable to compression ignition engines. In this case, in accordance with either of the aspects mentioned above, said one input is an input to an injection timing control and the other input is a mixture composition control of one of the types known in such engines, such as an exhaust gas recirculation control system.

This invention will now be described in more detail, by way of example, with reference to the drawings in which:

Figure 1 is a diagram of the functional components of an adaptive control system embodying this invention;

Figure 2 is a graph in which the ignition angle required to give particular levels of torque is plotted against air/fuel ratio;

Figure 3 is a block diagram of a microcomputer system which implements the functional components of Figure 1;

Figure 4 is a layout diagram of the computer program for the control system of Figure 3;

Figures 5 and 6 are flowcharts of the program; and

Figures 7 to 11 are diagrams of the functional components of five further adaptive control systems embodying this invention.

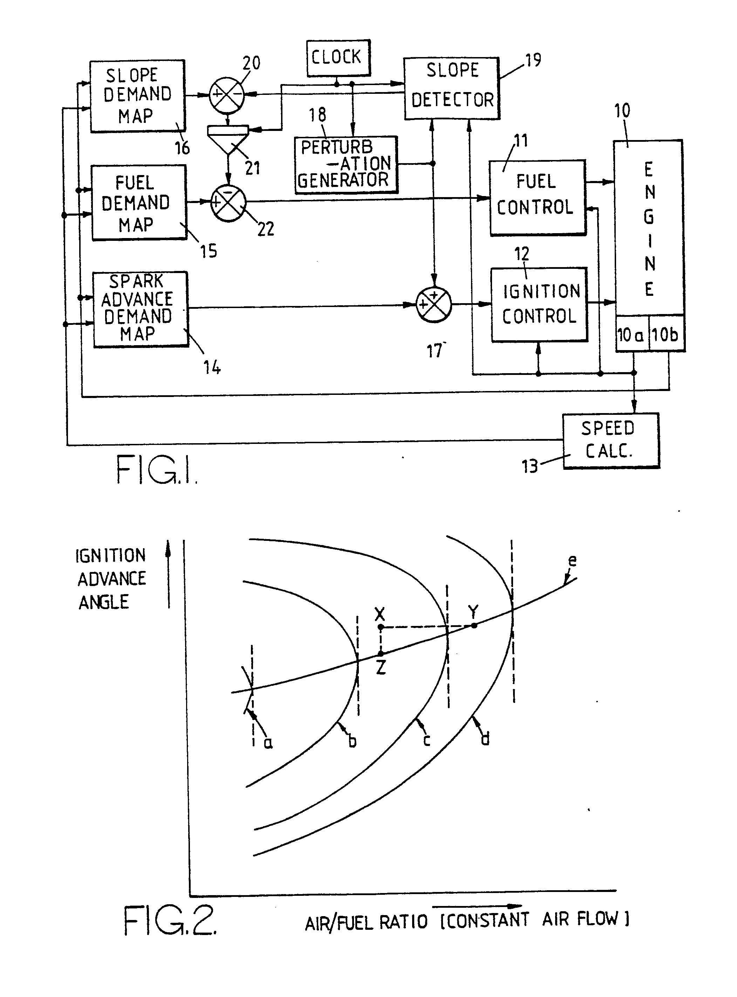

Referring firstly to Figure 2, the graphs a, b, c, d indicate lines of constant torque plotted on axes representing air/fuel ratio and ignition timing angle.

These graphs are obtained by running an engine on a test bench at a specific speed and air supply rate and measuring the torque obtained for different values of ignition angle and air/fuel ratio. Specifically, the engine is run with the air flow and ignition timing angle set to specific values. The fuelling setting of the engine and the braking load on the engine are adjusted until a specific fuel flow and engine speed are obtained. The torque is then noted.

Points on the air/fuel ratio against ignition timing angle graph at which one particular level of torque is obtained are joined to provide the isotorque curve d. Similarly, isotorque curves c, b and a can be drawn for further successively higher levels of torque. At any point in Figure 2, there is a slope vector which points in the direction which produces the maximum increase in torque. Everywhere along an isotorque curve, the slope vector is at right-angles to the curve since travel along the isotorque curve produces no change in torque. Hence the points at which the isotorque curves are parallel to the ignition timing axis are points at which there is no component of the slope vector in the ignition timing direction. The partial differential of torque with respect to ignition timing is therefore zero at these points which have been joined by line e on Figure 2. The same procedure is repeated for each combination of values of air flow rate and speed. It has been found by the applicants that the family of lines e thus derived is characteristic of the engine type being tested.

Thus, for a specific engine speed and a specific air/fuel ratio, line e represents a function relating ignition timing to air/fuel ratio. Thus, using line e, each value of air/fuel ratio is defined by a specific ignition timing value.

At each point not on line e, the partial differential or slope of engine torque with respect to ignition timing will have a non zero value. Using the points away from line e, a specific air/fuel ratio can be defined by a specific ignition timing value together with the associated value of the slope of engine torque with respect to ignition timing.

At points anywhere in Figure 2 above and to the left of line e, the slope of engine torque with respect to ignition timing is negative. Below and to the right of line e, the slope is positive. The area below and to the right of curve e in Figure 2 represents fuel mixtures which do not have sufficient time to burn to make the maximum possible contribution to the work output of the engine. The area above and to the left of curve e in Figure 2 represents fuel mixtures which burn too quickly to make the maximum contribution.

Whilst the engine is being tested to produce the curve shown in Figure 2, the emissions of pollutants, and especially nitrous oxides, are also measured.

Using the results of these tests, for each engine speed and air flow rate, an optimum combination of ignition timing and air/fuel ratio may be selected. The air/fuel ratio is selected so that the mixture is lean enough to prevent generation of excessive amounts of oxides of nitrogen but sufficiently rich to obtain efficient performance and avoid misfires. Normally, the ignition timing is a point on curve e as such points correspond to maximum torque output. However, under certain conditions a point away from curve e will be chosen. For example, during idling it may be desired to retard the ignition timing so as to reduce the emission of unburnt hydrocarbons. For each selected combination of ignition timing and air/fuel ratio, the slope of engine output with respect to engine speed is also noted.

The applicants have found that ignition timing can be established accurately and that the errors which occur when an engine is used are only minimal. In contrast, the factors which affect flame speed such as air/fuel ratio and compression ratio vary considerably and significant errors do occur when an engine is used. In the present invention, as will be explained in the various examples set out below, the ignition timing value is set to the optimum value for the engine operating conditions. The slope of engine output with respect to ignition timing is measured and the air/fuel ratio is then adjusted until the selected value of the slope is achieved. When this value of the slope is achieved, the flame speed will be at its optimum value and correspond to the air/fuel ratio which was selected to correspond to the particular value of the ignition timing value.

In the discussion of Figure 2 above, engine torque has been used as a parameter to define engine output. Engine output can also be defined by engine speed or engine power and engine speed is used in the example given below.

Also, in the discussion of Figure 2, the air supply rate has been used as the parameter to define the load demand to which the engine is subjected. Fuel flow, mixture flow, throttle angle or inlet manifold pressure may also be used to define load demand. In the examples given below, the manifold pressure is used.

Referring now to Figure 1, there is shown the functional components of an adaptive control system embodying the principles set out above.

An engine 10 has an electronic fuel control device 11. The device 11 is an electronic fuel injection control device of known type in which a separate injector for each cylinder is arranged to inject fuel into the branch of the air intake manifold leading to that cylinder. Injection is initiated at a specific point in the operating cycle of the engine and the fuel control receives a fuel quantity input signal which determines the duration of injector opening in each cycle.

The engine 10 has an ignition control device 12 which, in well known manner, causes the individual spark plugs of the engine to be fired at crankshaft angles determined by a spark angle input signal to the control 12.

The engine 10 has a crankshaft position transducer 10a and another transducer 10b which measures air intake manifold pressure as a parameter representing load demand. Alternatively, the transducer 10b could measure another parameter representing load demand such as throttle angle. The crankshaft position transducer is a pick-up which coacts with a toothed wheel on the crankshaft. An arrangement is incorporated to enable a datum position of the crankshaft to be recognised. Such an arrangement may be constituted by a circuit or a computer program to recognise a missing tooth positioned on the toothed wheel. A suitable arrangement is disclosed in GB—A—2142436. The crankshaft position signals derived from the transducer 10a are supplied to both the fuel and ignition control devices 11, 12 to enable the fuel injection and ignition operations to be properly synchronised with engine operation. The crankshaft position signal is also supplied to a speed calculator 13 which provides a frequently updated signal representing the current speed of the crankshaft.

The speed signal and the manifold pressure signal are supplied to three "map" type demand signal generators. One of these is an ignition advance angle demand map 14 which provides an output representing the selected ignition advance angle for the current value of engine speed and manifold pressure.

Another of the maps is a fuel demand map 15 which contains approximate values of the fuel demand signal to be supplied to the fuel control device 11 to obtain the desired flame speed at each combination of engine speed and manifold pressure.

The values stored in the maps 14 and 15 are selected using the principles which have been discussed above in relation to Figure 2.

The third map is a slope demand map 16. For each combination of engine speed and manifold pressure, the map 16 contains the value of the slope of engine speed with respect to ignition timing angle which corresponds to the selected values of ignition advance angle and air/fuel ratio. For most combinations of values of speed and manifold pressure, the desired value of the slope is zero. But, as explained above, in some operating conditions such as idling, a positive slope is required for minimum emissions.

Each of the above described maps is conveniently in the form of a digital memory in which the signals from the speed calculator 13 and the manifold pressure transducer 10b are combined together in accordance with some predetermined rule to form an address word and the demand is stored as a word of appropriate length at that memory address.

The ignition timing angle signal (or word) from map 14 is supplied to the ignition control device 12 via a summer 17 which also receives a perturbation signal from a perturbation generator 18, which has an input from a clock.

The perturbation signal is alternately positive and negative and hence the ignition timing angle signal supplied to the ignition control device 12 is varied cyclically to advance and retard the ignition angle by a small amount.

The perturbation signal is also supplied together with the signals from the transducer 10a to a slope detector 19. This detector also has an input from the clock and operates to monitor the effect of the perturbation in ignition timing angle on engine speed. Thus, it produces a signal corresponding to the actually detected value of the slope of engine speed with respect to the timing angle. This signal is supplied to an error detector 20 which compares the actual value of the slope with the demanded value derived from map 16. The resulting error signal varies in both magnitude and sign in accordance with the relationship between the desired and actual values of the slope. The error signal is applied to a controller 21 which is also connected to the clock. Controller 21 has an integrator transfer function.

The output of controller 21 is applied to a summer 22 which subtracts the output of controller 21 from the fuel demand signal derived from the map 15. The resulting corrected fuel demand signal is applied to the fuel control device 11. It will be appreciated that other transfer functions for controller 21 could be used. For example, a proportional plus integral transfer function may be used so as to increase the speed or stability of the control loop.

Thus, when the engine is running, the ignition timing angle is perturbed about the selected value for the operating conditions. The error signals derived by comparing the actual and desired values of the slope are integrated by controller 21 and the integral of these error signals is subtracted from the mapped fuel demand signal, thereby adjusting the quantity of fuel injected.

For example, referring again to Figure 2, for the particular operating conditions shown there it may be desired to operate the engine at point Y. However, owing to errors in the fuel control device 11, the value provided by fuel map 15 may cause the engine to operate at point X. As the air/fuel ratio is richer at point X than at the desired point Y, this could cause excessive emissions of oxides of nitrogen. However, the arrangement shown in Figure 1 will cause the air/fuel ratio to be adjusted until point Y is reached. Thus, despite errors in fuel control device 11, the engine will operate with a combination of ignition advance angle and air/fuel ratio which results in low emissions and optimum engine output.

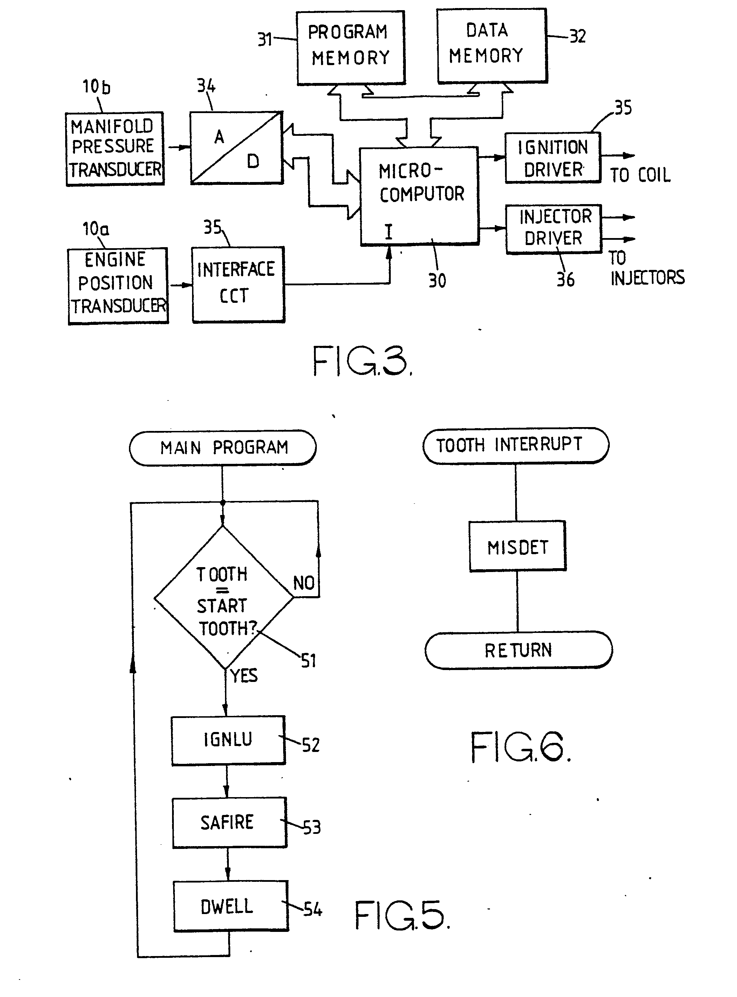

The functional block shown in Figure 1 may be implemented with a microcomputer system as shown in Figure 3. The maps 14, 15 and 16 are readily implemented using ROM whilst the perturbation generator is timed by a software counter. The generator output is added to the ignition advance angle word from map 14. The slope detector calculates the slope by reference to successive measurements of engine speed stored in microcomputer RAM. The integrator 21 is implemented with an air/fuel ratio correction schedule, stored in RAM, which is continuously updated in accordance with the error between the demanded slope and the actual slope.

As shown in Figure 3, the microcomputer system comprises a microcomputer 30 which forms part of an Intel integrated circuit type 8097 which is connected conventionally to a program memory 31 (ROM type 27c 64) which contains all the programs required for the microcomputer and the maps 14, 15 and 16. Temporary data storage is provided in RAM 32 (Hitachi type 6116).

The transducer 10a is as described in GB—A—2142436 and employs a toothed wheel having teeth at 10° intervals with a tooth missing at each of two reference locations 180° apart. The winding of this transducer is interfaced with the interrupt input I of the microcomputer 30 via an interface circuit 33 which operates mainly to filter out noise and provide clean squared pulses to the microcomputer input as each tooth passes the pick-up winding. As explained in GB—A—2142436, these pulses are used to provide crankshaft position pulses at 10° intervals and reference pulses at two specific positions in each crankshaft revolution. The microcomputer 30 uses these pulses to calculate the engine speed and thereby performs the function of speed calculator 13. The transducer 10b is interfaced by an analog to digital converter 34 with the microcomputer 30. The converter 34 also forms part of the said Intel integrated circuit type 8097.

A high speed output of computer 30 is connected to an ignition driver 35. The driver 35 includes an amplifier and provides the current to drive the ignition coil on and off. Another high speed output is connected to an injector driver 36 which supplies control signals for the individual fuel injectors. Since the teeth on the toothed wheel are positioned at 10° intervals, finer resolution is obtained by interpolation. For each interval, the interpolation is achieved by using the time taken for the passage of the previous 10° interval.

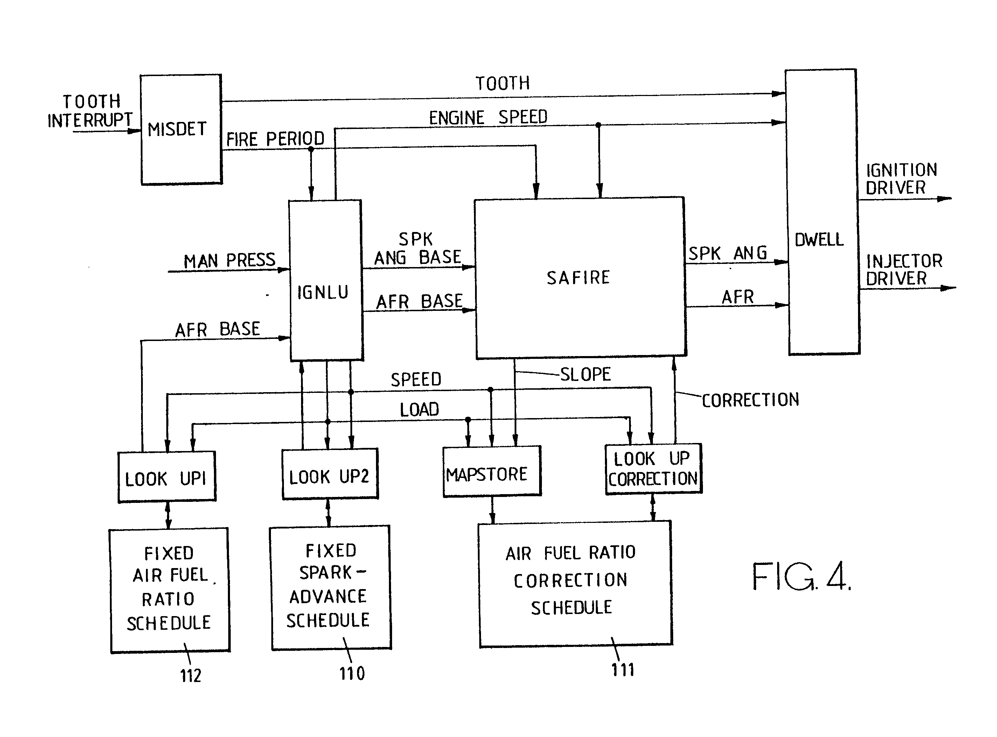

Referring to Figure 4, there is shown a general arrangement of the modules which form the program and also the flow of data between these modules. The program comprises the modules MISDET, IGNLU, SAFIRE and DWELL. The module IGNLU calls sub-modules LOOK UP1 and LOOK UP2, and the module SAFIRE calls sub-modules MAP STORE and LOOK UP CORRECTION. Figure 4 also shows a fixed spark advance schedule 110 which contains the fixed spark advance values and which corresponds to map 14 shown in Figure 1. Figure 4 also shows a fixed air/fuel ratio schedule 112 which corresponds to the fixed air/fuel ratio map 16 shown in Figure 1. Furthermore, Figure 4 shows an air/fuel ratio correction schedule 111 which contains the correction values for the air/fuel ratio. The correction schedule is updated under the control of the sub-module MAP STORE in accordance with the error between the demanded slope and the actual slope. The values stored in the correction schedule 111 are used to correct the air/fuel ratio under the control of the sub-module LOOK UP CORRECTION. Thus, the sub-modules MAP STORE and LOOK UP CORRECTION together with the correction schedule 111 perform the function of the controller 21 of Figure 1.

The module MISDET receives an interrupt signal TOOTH INTERRUPT and this module is executed each time a tooth is detected. A variable TOOTH is supplied to the module DWELL and represents the position of the crankshaft to within one tooth of the toothed wheel. This module MISDET compares the period between each tooth and thereby detects the missing tooth. When the missing tooth is detected, this module re-establishes a relationship between the variable TOOTH and the absolute position of the crankshaft. The module MISDET also calculates the fire period and supplies this as a variable FIRE PERIOD to the modules IGNLU and SAFIRE. In the present example, ignition occurs each time the crankshaft rotates through approximately 180°. Fire period is defined as the time which is taken for the crankshaft to rotate through exactly 180°.

The module IGNLU receives a variable MAN PRESS representing manifold pressure and this variable is derived from the output signal of transducer 10b.

In each of the schedules 110, 111 and 112, the values are stored for each combination of engine speed and manifold pressure. In order to address the schedules 110, 111 and 112, the module IGNLU generates address variables SPEED and LOAD corresponding respectively to engine speed and manifold pressure.

The module IGNLU also calculates engine speed from the variable FIRE PERIOD and supplies this as a variable ENG SPEED to each of the modules SAFIRE and DWELL.

The module IGNLU calls the sub-module LOOK UP2 which calculates the basic spark advance angle as a variable SPK ANG BASE by a standard interpolation process. This variable is then supplied to the module SAFIRE. The module IGNLU also calls the sub-module LOOK UP1 which calculates the basic value for the air/fuel ratio by a similar standard interpolation process and supplies this value as a variable AFR BASE. This variable is also supplied to the module SAFIRE.

The module IGNLU is executed after each ignition spark and the module SAFIRE is executed after module IGNLU.

The module SAFIRE generates a perturbation value which varies alternately between +3° and −3° of spark advance angle at a frequency of 10Hz. The perturbation value is summed with the basic spark advance value SPK ANG BASE to provide a spark command value SPK ANG which is supplied to the module DWELL.

The module SAFIRE also calls the sub-routine LOOK UP CORRECTION to obtain a correction value for the air/fuel ratio. This correction value is summed with the basic air/fuel ratio value AFR BASE to produce a commanded air/fuel ratio value AFR and this is also supplied to the module DWELL.

The module SAFIRE also calculates the slope of engine output with respect to spark advance. The maximum effect of the perturbing on engine speed is found to occur almost half a perturbation cycle after each change in the sign of the perturbation when the perturbation frequency is 10Hz. Thus, in a perturbation cycle the ignition is advanced by 3° from the base value. The fire period associated with that advanced timing is recorded just before the ignition is retarded by 3° from the base value 50 ms later. The fire period associated with that retarded timing is recorded just before the ignition is re-advanced by 3° from the base value 100 ms after the start of the cycle. If the engine is operating under conditions such that advancing ignition causes acceleration and retarding ignition causes deceleration, the second value for the fire period will be longer than the first value for the fire period. The first value for the fire period is subtracted from the second value and the resulting difference represents the slope.

The module SAFIRE also calls the sub-module MAP STORE to update the air/fuel ratio correction schedule 111. Each time the schedule 111 is updated, this is performed in accordance with the followung formula:

new correction=old correction+k×(SLOPE)

In this formula, k is a constant and SLOPE represents the actual value of the slope for engine speed with respect to spark advance. As may be readily appreciated, the schedule 111 is updated at the point corresponding to the prevailing operating conditions.

The module DWELL uses the variables TOOTH and ENG SPEED to cause the microcomputer 30 to provide appropriate signals to the ignition driver 35 and injector driver 36 to achieve ignition and fuel injection at appropriate crankshaft positions with the air/fuel ratio set to the commanded value.

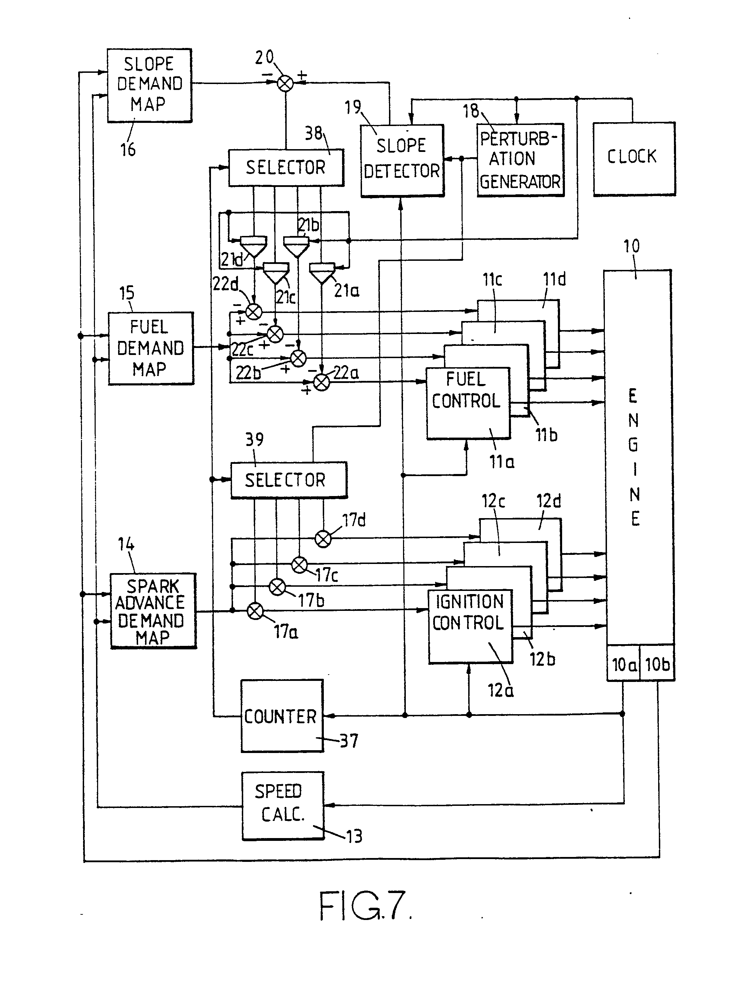

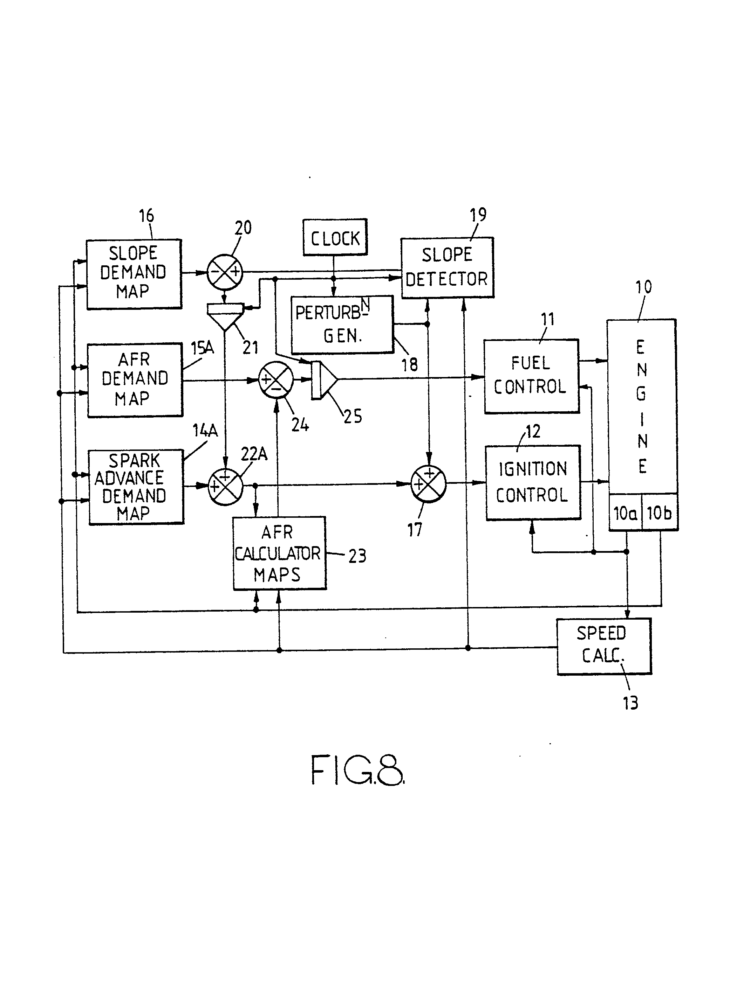

Figures 5 and 6 show the sequence of operations of the modules set out in Figure 4. The program comprises a main program MAIN PROGRAM shown in Figure 5 and an interrupt routine TOOTH INTERRUPT shown in Figure 6.

The interrupt routine shown in Figure 6 is performed each time an interrupt signal is produced following the detection of a tooth. In this routine, the module MISDET is called.

In the main program as shown in Figure 5, the variable TOOTH is compared with a constant START TOOTH in a step S1. The constant START TOOTH is chosen to correspond to the correct angular position of the crankshaft to allow modules IGNLU, SAFIRE and DWELL to be executed before the occurrence of the next spark. When an equality is found in step S1, these three modules are performed successively in steps S2, S3 and S4 before returning to step S1. Thus, the modules IGNLU, SAFIRE and DWELL are executed synchronously with the firing of the engine and these modules are always executed between actual sparks.

It should be noted that the embodiment described above with referecne to Figures 1 to 6 is fundamentally different from the prior art arrangement described in the paper published by the Society of Automotive Engineers and in the U.S. Patent detailed above. In the proir art arrangement, the ignition timing is perturbed about a value which is adjusted in accordance with response to the perturbations. The air/fuel ratio is controlled independently of the adjustment to the ignition timing. With such an arrangement, if there is an error in the air/fuel ratio, this will cause the ignition timing to be adjusted but no correction will be made to the air/fuel ratio. For example, with the operating conditions as shown in Figure 2, this prior art arrangement may behave as follows. It may be desired to operate a point Y but, owing to an error in the fuelling, the engine is operating at point X. As the engine torque is not maximum at point X, the ignition timing will be adjusted until the engine operates at point Z on line e. Thus, the engine will operate with an air/fuel ratio substantially richer than desired. Although the torque is maximized, the error in the fuelling may seriously worsen the generation of oxides of nitrogen. With the embodiment described above, the ignition timing is set to a value which gives the maximum torque and the air/fuel ratio is adjusted until the desired ratio is achieved thereby achieving the required level of emissions for oxides of nitrogen.

The present invention may also be applied to an engine in which the air/fuel ratio is controlled with an electronically trimmed carburettor or single point injector. With such a carburettor, the engine will respond more slowly to changes in fuelling due to transport effects in the inlet manifold. In order to allow for this delay, a relatively low value is used for the constant k to give a slower rate of correction.

The applicants have also performed tests on an engine which uses exhaust gas recirculation (EGR). These tests have been performed at a set of constant throttle angles. These tests have been plotted on graphs similar to that shown in Figure 2 but with the horizontal axis representing the exhaust gas recirculation ratio. This recirculation ratio is defined as the ratio of the sum of the mass of air and the mass of exhaust to the mass of fuel supplied to the engine. The results of these tests show characteristics which are closely similar to those shown in Figure 2.

For an engine where exhaust gas recirculation is used as a means to control mixture composition, the embodiment of Figure 1 may be modified as follows.

The map 15 is replaced by an EGR demand map and fuel control device 11 is replaced by an EGR control device. The EGR demand map contains approximate values for desired EGR ratios at the various combinations of engine speed and throttle angle.

In an engine which uses exhaust gas recirculation and a carburettor to control the air/fuel ratio, exhaust gas is added to the mixture of air and fuel at a position downstream from the carburettor. The amount of exhaust gas supplied is controlled by a solenoid operated valve in the duct supplying the exhaust gas. There are various possibilities for the signal supplied to the exhaust gas control device. The signal may simply correspond in magnitude to the signal which is supplied to the solenoid operated valve. Alternatively, the signal may be a command signal for a particular operating position of the valve, a feedback loop being supplied to ensure that the commanded position is achieved. As another possibility, the signal may command a specific value of exhaust gas flow and in this case a feedback loop is also required to ensure that this value is achieved.

In an alternative arrangement for providing exhaust gas recirculation, the timing of opening of the valves which permit the mixture to be induced into the cylinders is controlled. By opening these valves earlier than normal, some of the exhaust gas is sucked into the inlet manifold thus providing the required exhaust gas recirculation.

When using exhaust gas recirculation, an indpendent fuel control device, such as a carburettor, is used. The operation of this is not controlled by the control system which is the subject of the present application.

In the modification to Figure 1 to achieve exhaust gas recirculation, the ignition control device 12, the engine 10 and the crankshaft position transducer 10a remain as described previously with reference to Figure 1. The transducer 10b preferably measures throttle angle and the reason for this will be explained below.

The ignition advance angle demand map 14 provides an output representing the ignition angle which, for the prevailing values of engine speed and throttle angle, will give the maximum torque when there is a desired value of EGR ratio chosen to achieve the required level of emissions. Alternatively, the ignition angle may be one which provides a known slope of engine speed with respect to spark timing and which corresponds to a desired level of EGR ratio.

The third map 16 is exactly as described with reference to the embodiment of Figure 1. Also, the error detector 17, the summer 20, the perturbation generator 18, the slope detector 19 and the controller 21 are all as decribed with reference to Figure 1.

The output of controller 21 is, however, added to the output of the value obtained from the EGR demand map so as to ensure that the mixture is diluted when the measured slope is less than the desired slope as this indicates a more rapid flame speed than is desired.

The integrator in controller 21 is preferably equipped with limits. This ensures that no further integration will occur after the output of summer 22 has reached the limit value for the EGR ratio even when the error signal which drove the signal to the limit persists. This ensures that the output of the integrator can move away from the limit quickly if the error polarity reverses.

The map 14, the EGR demand map and the map 16 are preferably addressed with throttle angle rather than manifold pressure or air mass flow rate so as to avoid problems caused by parasitic control loops. These can arise if the map output influences EGR and the EGR then affects the addressing parameter such as manifold pressure or air mass flow rate and hence the map output. Throttle angle will not be affected in this way because it is controlled directly by the driver. Consequently, throttle angle will only be affected if changes in the EGR ratio produce torque changes and the driver reacts to these torque changes and changes the throttle angle. Changes in the throttle angle produced in this way are too weak to give rise to a stability problem.

Thus, the present invention may also be used to provide feedback control for an engine equipped with exhaust gas recirculation. As the valve used in exhaust gas recirculation is liable to changes in its characteristics as deposits build up over the life of the engine, such feedback is especially useful.

In a paper entitled "Lean Mixture or EGR—which is better for fuel economy and $NO_x$ reductions", by Nakajima et al, paper C94/79, Institute of Mechanical Engineers, London 1979, dilution of fuel mixture with excess air and with exhaust gas are compared. According to this paper, dilution with exhaust gas gives lower engine roughness but dilution with excess air gives lower fuel consumption.

It is well known to measure engine roughness from measurement of the period of crankshaft rotation through set intervals. Such measurements are described in a paper entitled "Experience with a new method of measuring engine roughness" by Latsch et al, ISATA Graz Automotive Automation, London 1978, and also in US Patent 4 178 891.

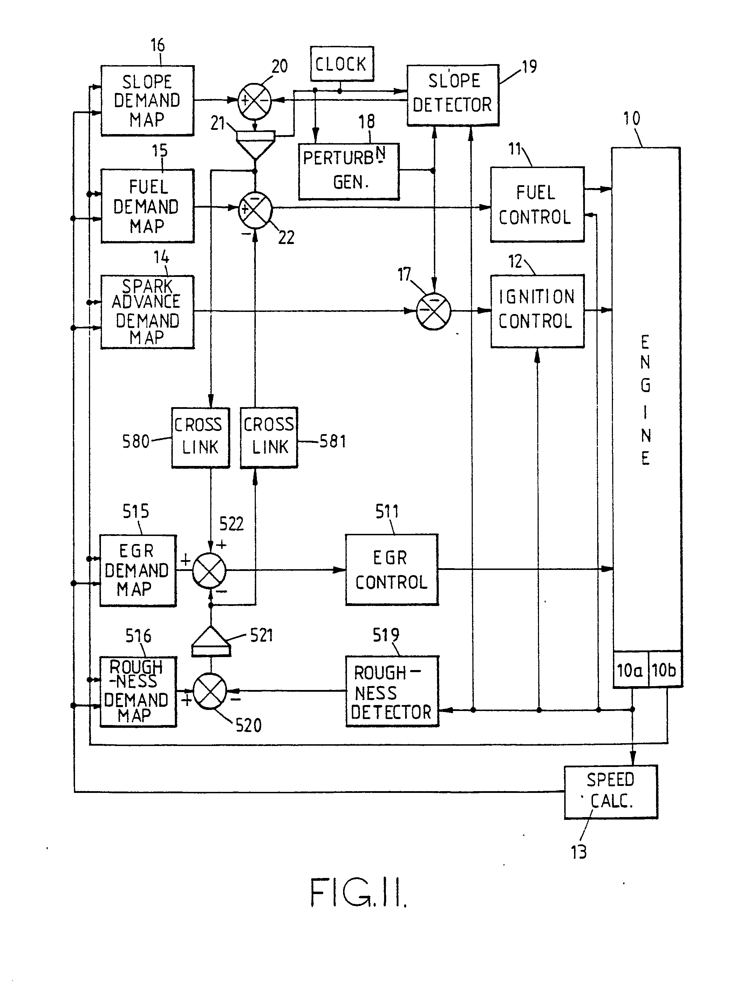

A further example of the invention will now be described with reference to Figure 11. In this example, a required low level of engine roughness is achieved. At the same time, the total level of dilution of the mixture is controlled so as to achieve a lower level of emissions of oxides of nitrogen, as has been described above with reference to diluting the mixture with excess air and to diluting the mixture with exhaust gas.

The example shown in Figure 11 includes all the elements shown in Figure 1 and like elements are denoted by the same reference numerals. In the example of Figure 11, the output of crankshaft position transducer 10a is also supplied to a roughness detector 519. The roughness detector 519 may be as described in the above mentioned paper by Latsch et al. There is also provided a roughness demand map 516 and an EGR demand map 515 addressed by the outputs of transducer 10b and speed calculator 13. The output signal from the roughness detector 519 is subtracted from the output of the roughness map in an error detector 520 and the resulting error signal is supplied to a roughness controller 521. The controller 521 operates in a similar manner to controller 21.

As before, the output signal from controller 21 is subtracted from an approximate fuel demand signal from maps 15 in summer 22 and the resulting signal is supplied to fuel control device 11. If the output of slope detector 19 is greater than the output of map 16, this indicates that the burn duration is too low and controller 21 causes a reduction in the air/fuel ratio.

Similarly, the output of controller 521 is subtracted from an approximate EGR demand signal in a summer 522 and the resulting signal is supplied to an EGR control device 511. If the output of the roughness detector 519 is greater than the output of map 516, this indicates that a higher proportion of exhaust gas is required in the mixture and the controller 521 causes an increase in the flow rate of the exhaust gas.

The example of Figure 11 has the advantage that the crankshaft position transducer 10a is used to provide feedback control of both the air/ fuel ratio and the EGR ratio. The error signal from summer 520 represents the error in engine roughness and is used to control the EGR ratio. If excessive roughness is experienced, the system will increase the EGR ratio. In turn, this is likely to reduce the flame speed and hence the emission of oxides of nitrogen. Consequently, the slope of engine output with respect to spark advance will be positive and this will cause an increase in the air/fuel ratio via fuel control device 11. This will bring the flame speed and hence the emissions of oxides of nitrogen and fuel consumption closer to the original target values.

In order to speed up correction and reduce the risk of unwanted destabilising interactions between the EGR and air/fuel ratio control loops, deliberate and stabilising instructions can be added. These comprise a cross link 580 between the output of controller 21 and summer 522 and a cross link 581 between the output of controller 521 and summer 22.

Link 580 ensures that corrections to the quantity of diluent in response to slope errors are made by changing the EGR ratio as well as the air/fuel ratio. Link 581 ensures that corrections to the composition of diluent in response to roughness errors are made by changing the air/fuel ratio as well as the EGR ratio. Links 580 and 581 may have gain and frequency characteristics arranged to reduce unwanted interactions in the fuel control device 11. This may be achieved using the diagonal dominance design method outlined in "Progress in the design of multivassible control systems" by H. H. Rosenbrock, Measurement and Control, Volume 4, 1971, pages 9 to 11.

In this way, signals arising from errors in engine roughness can be fed to both the EGR control device 511 and the fuel control device 12 in such proportions, and with such relative speed, to ensure only a very slight effect on slope. Similarly, signals arising from errors in slope can be fed to both the fuel control device 11 and the EGR control device 511 in such proportions, and with such relative speed, to ensure only a very slight effect on roughness.

In a multicylinder engine particular cylinders may have faster burning characteristics than others due, for example, to thermal effects from neighbouring cylinders. If the present invention is used to control the mixture composition of individual cylinders or groups of cylinders, the emissions of oxides of nitrogen of the faster and slower burning cylinders can be brought closer to the required value.

This requires independent control of the fuel dispensed to each individual cylinder or to each group of cylinders forming part of the engine. It is well known that the air/fuel ratio may vary from cylinder to cylinder due to distribution problems.

Control of the mixture composition of individual cylinders or groups of cylinders can compensate for poor distribution of the air or fuel which is caused, for example, by production tolerances or aging in the fuel control devices.

An example of the present invention applied to control of the fuelling of individual cylinders will now be described with reference to Figure 7. It is to be noted that the invention could also be used to control the fuelling of groups of cylinders where the cylinders of each group have a common fuel control device, such as a common carburettor or a common fuel injection control device.

Figure 7 shows a system which is similar in principle to that shown in Figure 1 but in which the fuelling is optimised for each individual cylinder of a four cylinder engine.

Referring now to Figure 7, the engine and transducers 10a and 10b are as described for Figure 1. The ignition control device 12 of Figure 1 is replaced by four individual control devices 12a, 12b, 12c and 12d, each of which controls a respective individual cylinder. The fuel control device 11 of Figure 1 is replaced by four separate fuel control devices 11a, 11b, 11c and 11d, each of which controls the fuel supply to an individual cylinder. The maps 14, 15 and 16 in Figure 7 are exactly the same as described for Figure 1.

The system of Figure 4 includes a counter 37 which determines which of the four cylinders is to have its fuelling optimised. Each cylinder is optimised for a fixed duration which corresponds to a preset number of engine fires. Counter 37 selects a different cylinder for optimisation after this duration expires.

The counter 37 controls which cylinder is to be optimised via two selectors 38 and 39. The selector 39 determines which of four summers 17a, 17b, 17c, 17d receives the perturbation signal at a given time. Only the cylinder which is to be optimised is perturbed. Selector 38 determines which of the four integral controllers 21a, 21b, 21c, 21d is updated. These four controllers correspond to controller 21 described for Figure 1. The counter 37 ensures that the cylinder whose fuelling is updated is the same as the cylinder whose ignition is perturbed.

After selecting a cylinder for optimisation, the operation of Figure 7 is similar to that of Figure 1. The ignition timing angle signal from map 14 is supplied to the ignition control devices 12a to 12d via summers 17a to 17d.

The perturbation signal from the perturbation generator 18 is directed via selector 39 to the summer corresponding to the cylinder whose fuelling is to be optimised.

The perturbation signal together with a signal from transducer 10a and a clock is supplied to the slope detector 19. This operates to monitor the effect of the perturbation in ignition angle on engine speed. The detector 19 produces an output signal proportional to the slope of engine speed with respect to ignition angle for the cylinder being optimised. This signal is supplied to the error detector 20 which compares the actual value of the slope with the demanded value derived from map 16. The resulting error signal is then directed via selector 38 to the controller 21a to 21d of the cylinder being optimised. The outputs of the four integral controllers 21a to 21d are

applied to four summers 22a to 22d which subtract the output of the controller from the fuel demand signal derived from map 15. The resulting corrected fuel demand signals are applied to the respective fuel control devices 11a to 11d.

The magnitude of the signal produced by slope detector 19 for an individual cylinder will be smaller than the magnitude of the corresponding signal for the system described with reference to Figure 1. However, the noise component in this signal is comparable with a noise component for the system described with reference to Figure 1. The controllers 21a to 21d of Figure 7 have nominally the same gain as the controller 21 of Figure 2. This results in a longer time for optimising the fuelling than required for the system of Figure 1.

In general, for a small change in ignition angle, the slope of engine speed with respect to ignition angle of an individual cylinder will differ from that for the entire engine. In the average sense, the slope for an individual cylinder will be approximately 1 quarter of the slope for the entire engine. Consequently, the contents of map 16 of the system shown in Figure 4 should be 1 quarter of the magnitude of the contents of the map 16 of the system of Figure 1.

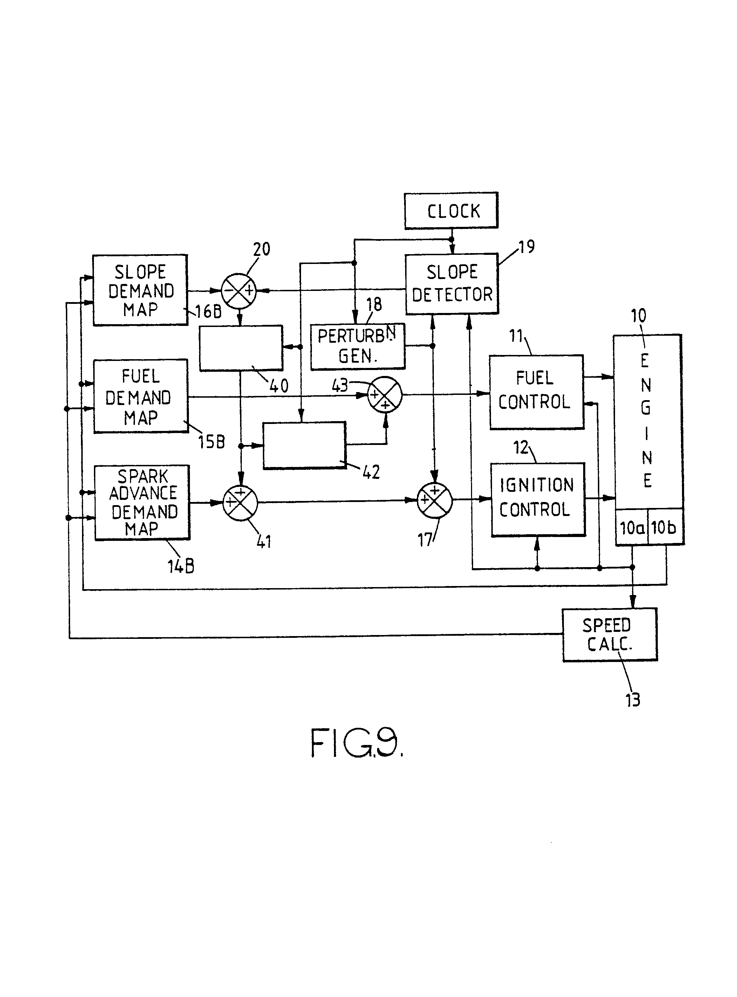

Turning now to Figure 8, there is shown a diagram of the functional components of an adaptive control system forming another embodiment of the present invention. In the system shown in Figure 8, parts which are substantially the same as those shown in Figure 1 have the same reference numerals. The map 14 of Figure 1 is replaced by a map 14A giving an output approximately representing desired ignition timing angle. This is not connected directly to the summer 17 but to a summer 22a which also receives the output of the controller 21.

Instead of fuel demand map 15, there is an air/fuel ratio demand map 15A which contains values of the air/fuel ratio required at different combinations of speed and manifold pressure to achieve the required level of emissions of oxides of nitrogen.

Controller 21 (which may have an integral characteristic, or a proportional plus integral characteristic for greater stability) acts to reduce the slope error by generating a correction to the spark advance provided by map 14A. This correction is added to the approximate desired spark advance output from map 14A in summer 22A to provide a current estimate of the optimum spark advance which is then supplied via summer 17 to the ignition control 12.

With this arrangement the ignition timing angle is optimised substantially as in the prior art publication mentioned above.

The current estimate of the optimum spark advance is also supplied from summer 22A to another map 23.

Map 23 is used for obtaining an estimate of the actual existing air/fuel ratio. In this case the digital memory has its addess word defined by combining speed, manifold pressure and the current estimate of the optimum spark advance, the latter being the output of summer 22A. The words stored at the various addresses in this memory represent curves such as e from Figure 2. Map 15A and map 23 have their outputs compared by a summer 24, and the resulting air/fuel ratio error signal is integrated by a suitable controller 25 to provide the fuel demand signal to fuel control 11.

With this arrangement the spark advance is maintained close to its optimum level all the time since the ignition controller 21 can be given a relatively rapid response. The fuelling loop under the action of controller 25 will react more slowly since it cannot correct the air/fuel ratio until a correct estimate of the optimum spark advance has been formed.

The system shown in Figure 8 provides excellent control over emissions of oxides of nitrogen together with fuel efficient running of the engine.

Another example of the invention is shown in Figure 9. in this example, the output of the error detector 20 is applied to a controller 40 (which may have an integral transfer characteristic for greater stability). The output of controller 40 is applied to a summer 41. The summer 41 adds the output of controller 40 to the output from the spark advance demand map 14B so as to correct ignition timing to the required value for the existing fuelling conditions. Thus, the ignition timing is controlled in the same way as in the prior art arrangement mentioned above. However, the output of the controller 40 is also applied to another controller 42, the output of which is added to the output of the fuel demand map 15B by a summer 43. The controller 42, which may have an integral transfer characteristic, adjusts the air/fuel ratio so as to reduce the signal supplied to its input from controller 40. With such an arrangement, the spark advance is maintained at its optimum level substantially all the time since the ignition control loop can be given a relatively rapid response. The fuelling control loop under the influence of controller 42, however, operates relatively slowly but has the effect of slowly replacing correction of ignition timing by correction of the air/fuel ratio. In steady running conditions, the correction applied to the ignition timing will be reduced to zero. Thus, in a steady state, the system of Figure 9 adjusts the fuelling to the same value as is achieved in the system of Figure 1 but the response of the two systems to errors differs significantly.

It is instructive to consider the trajectory followed on the diagram of Figure 2 by the systems of Figure 1, Figure 8 and Figure 9, starting from point X and assuming that the slope demand is zero. The system of Figure 1 uses the error in the slope of engine output with respect to spark advance to correct the composition directly without any change in the basic spark advance. The operation point will therefore move horizontally to the right on Figure 2 until line e is reached at point Y.

The systems of Figure 8 and Figure 9 both use the slope information in the first place to correct the spark advance and therefore make their first moves vertically down on Figure 2 towards point Z on line *e*, just as would the prior art system mentioned above. However, before line *e* is reached the composition control loop would begin to react so the trajectory on Figure 2 would curve to the right and slope upwards somewhat, becoming asymptotic to line *e* and moving up and to the right until finally settling at point Y, just as in the system of Figure 1.

In contrast the prior art arrangement does not alter the air/fuel ratio and settles at point Z on line *e* vertically displaced from point X and so does not provide such good control of oxides of nitrogen.

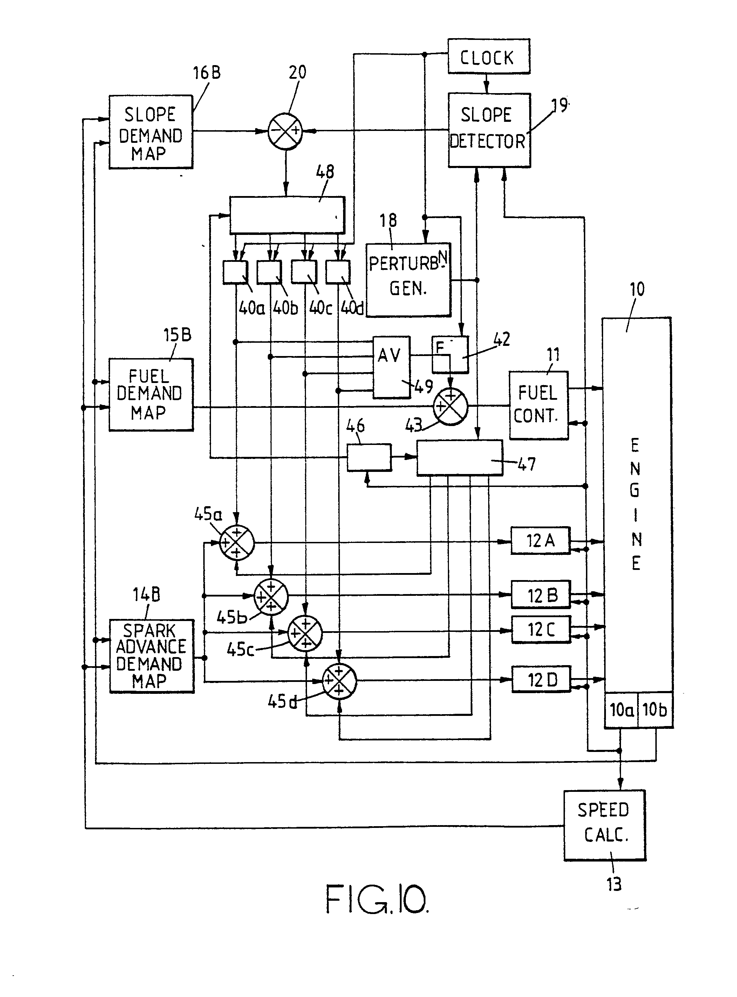

Figure 10 shows the application of the principle of the system of Figure 6 to an engine in which ignition timing for each cylinder is controlled separately, but in which mixture composition is controlled jointly (for example by a carburettor or by exhaust recirculation). In the example shown, the functions of summers 41 and 17 have been combined, each ignition channel including a summer 45a, 45b, 45c, 45d. The perturbation signals are applied to these by a channel selector 47. The counter 46 also controls a selector 48 which routes the error signals from summer 20 to a set of controllers 40a, 40b, 40c, 40d, each of which is provided for a respective cylinder. An averaging circuit 49 receives the outputs of all controllers 40a to 40d and provides an output to controller 42 representing the average of the outputs of controllers 40a to 40d. Thus, in steady running, the average correction to the spark advance angle will fall to zero as a result of the action of the fuel correction loop.

Instead of using an averaging circuit 49, the most positive (advancing) or most negative (retarding) correction signal from the controllers 40a to 40d may be selected for application to the controller 42.

The invention has been described for use with a conventional mixture control device in which the mixture control device alters the rate of fuel flow whilst the rate of air flow or the rate of mixture flow is controlled by the driver of the vehicle in which the engine is installed. However, the invention is also applicable to unconventional systems in which the mixture control device alters the rate of air flow and the fuel flow is directly controlled by the driver. In this case, graphs equivalent to those shown in Figure 2 may be derived but with speed and fuel flow rate held constant rather than speed and air flow rate. Spark advance demand angles are then chosen for storage in spark advance demand map 14, and an air demand map would replace fuel demand map 15 in Figures 1 and 7. Similarly, in Figures 9 and 10, the data in maps 14B and 15B will be replaced as described above. For the example of Figure 8, only the spark demand map 14A would need to be replaced as described above. In each case, the fuel controllers 11, 11a, 11b, 11c, 11d are replaced by air control devices such as a servo-driven throttle butterfly.

## Claims

1. A method of operating an internal combustion engine having two control inputs both of which affect one parameter of engine output, said method comprising periodically perturbing one of said inputs about a base value which is established in accordance with the engine operating conditions, monitoring said engine output, and determining the slope of engine output with respect to said one input, characterised in that the method further comprises controlling the other input so as to obtain a desired value of said slope.

2. A method as claimed in Claim 1, characterised in that said desired value of said slope is established as a function of the operating conditions.

3. A method as claimed in Claim 1 or Claim 2, characterised in that said one input is a control input to an ignition timing control device and said other input is a control input to a mixture composition control device.

4. A method as claimed in Claim 1 or Claim 2, characterised in that said one input is a control input to an injection timing control device and said other input is a control input to a mixture composition control device.

5. A method as claimed in any one of the preceding Claims, characterised in that said engine output is engine speed.

6. A method as claimed in any one of the preceding Claims, characterised in that said base value is derived from a map providing timing data as a function of engine speed and load demand.

7. A method as claimed in Claim 3, characterised in that the mixture composition control device is a fuel injection control device which separately determines the amount of fuel injected into each engine cylinder in turn, the ignition timing value is perturbed about a base value for each cylinder in turn, the slope of engine output with respect to ignition timing is determined for each cylinder in turn, and the fuel injected into each cylinder is controlled so as to achieve the desired value of said slope for each cylinder.

8. A method as claimed in Claim 3, characterised in that the cylinders are grouped into at least two sets of cylinders, the mixture composition control device is a fuel injection control device which separately determines the amount of fuel injected into each set of cylinders in turn, the ignition timing value is perturbed about a base value for each set of cylinders in turn, and the fuel injected into each set of cylinders is controlled so as to achieve the desired value of said slope for each set of cylinders.

9. A method as claimed in Claim 3, characterised in that the mixture control device is at least two carburettors each of which supplies fuel mixture to a respective set of cylinders, the ignition timing value is perturbed about a base value for each set of cylinders in turn, the slope of engine output with respect to ignition timing is determined for each set of cylinders in turn, and the fuel mixture supplied to each set of cylinders is controlled so as to achieve the desired value of the slope for each set of cylinders.

10. A method as claimed in Claim 3, characterised in that the mixture composition control device determines the composition of the mixture fed to a set of at least two cylinders forming at least part of the engine, the ignition timing is perturbed about a base value for each cylinder of the set in turn, the slope of engine output with respect to ignition timing is determined for each cylinder of the set in turn, a correction to the ignition timing for each cylinder of the set is generated so as to achieve the desired value of said slope for each cylinder of the set, a predetermined function of the ignition timing corrections is calculated, and the composition of the mixture fed to the set of cylinders is controlled so as to reduce said predetermined function of the ignition timing corrections.

11. A method as claimed in any one of Claims 1 to 3, characterised in that the engine has a further control input, said method further including monitoring a further engine output of said engine and controlling said further input so as to achieve a desired value of said further engine output.

12. A method as claimed in Claim 3, characterised in that the engine has a further control input for an exhaust gas recirculation control device, said method further including monitoring the roughness of said engine and controlling said further input so as to achieve a desired value of engine roughness.

13. A method as claimed in Claim 1, characterised in that the method further includes controlling said one input so as to obtain a desired value of said slope, said one input being changed more rapidly than said other input.

14. A method as claimed in Claim 1, characterised in that the method further includes initially correcting said one input so as to obtain a desired value of said slope, and then progressively controlling said other input so as to maintain said desired value of said slope whilst removing the correction to said one input.

15. An adaptive control system for an internal combustion engine (10) having two control inputs both of which affect one parameter of engine output, said system comprising means (14; 14A; 14B) for establishing a base value for one of said inputs as a function of engine operating conditions, means (17, 18; 17, 18, 39; 18, 47, 45) for periodically perturbing said one input about said base value, means (10a) for monitoring said engine output, means (19) for determining the slope of engine output with respect to said one input, characterised in that the system further comprises means (20, 21, 22; 20, 38, 21, 22; 20, 21, 22A; 23, 24, 25; 20, 40, 42, 43; 20, 48, 40, 49, 42, 43) for controlling the other input so as to obtain a desired value of said slope.

16. A system as claimed in Claim 15, characterised in that the system includes means (16; 16B) for establishing said slope as a function of said engine operating conditions.

17. A system as claimed in Claim 15 or Claim 16, characterised in that the system includes an ignition timing control device (12) responsive to said one control input, and a mixture composition control device (11) responsive to said other control input.

18. A system as claimed in any one of Claims 15 to 17, characterised in that the system further includes means (10a) for detecting engine speed and supplying an output signal to said slope determining means (19), engine speed representing engine output.

19. A system as claimed in Claim 17 or Claim 18, characterised in that the mixture composition control device is a fuel injector control device (11).

20. A system as claimed in Claim 17 or Claim 18, characterised in that the mixture composition control device is an electronically trimmed carburettor.

21. A system as claimed in Claim 17 or Claim 18, characterised in that the mixture composition control device is a device for controlling exhaust gas recirculation.

22. A system as claimed in any one of Claims 17 to 21, characterised in that the system includes means (10b) for determining the load demand to which the engine is subjected, and means (10a, 13) for determining engine speed, load demand and engine speed being used as said engine operating conditions.

23. A system as claimed in Claim 17, characterised in that the mixture composition control device (11) determines the amount of fuel injected into each engine cylinder in turn, said means (17, 18, 39) for perturbing said one input are arranged to perturb the ignition timing value about a base value for each cylinder in turn, said slope determining means (19) determines the slope of engine output with respect to ignition timing for each cylinder in turn, and said means (20, 38, 21, 22) controlling for the other input controls the fuel injected into each cylinder so as to achieve the desired value of said slope for each cylinder.

24. A system as claimed in Claim 17, characterised in that the mixture composition control device comprises at least two carburettors each of which supplies fuel mixture to a respective set of cylinders, said means for perturbing said one input are arranged to perturb the ignition timing value about a base value for each set of cylinders in turn, said slope determining means determines the slope of engine output with respect to ignition timing for each cylinder in turn, and said means for controlling the other input controls the fuel mixture supplied to each set of cylinders so as to achieve the desired value of the slope for each set of cylinders.

25. A system as claimed in Claim 14, characterised in that the system further includes an exhaust gas recirculation control device (411) responsive to a further input control signal, means (519) for monitoring the roughness of the engine, and means (520, 521, 522) for controlling said further input so as to obtain a desired value of engine roughness.

**Patentansprüche**

1. Verfahren zum Betrieb einer Brennkraftmaschine mit zwei Steuereingängen, wovon beide einen Parameter der Maschinenausgangsgrösse beeinflussen, wobei das Verfahren die periodische Veränderung eines der Steuereingänge um einen Grundwert umfasst, der in Einklang mit den Betriebsbedingungen der Brennkraftmaschine festgelegt wird, die Überwachung der Maschinenausgangsleistung, und die Bestimmung der Steilheit der Maschinenausgangsleistung relativ zu dem einen Steuereingang, dadurch gekennzeichnet, dass das Verfahren ferner die Steuerung des anderen Steuereingangs in solcher Weise umfasst, dass ein gewünschter Wert der Steilheit erhalten wird.

2. Verfahren nach Anspruch 1, dadurch gekennzeichnet, dass der gewünschte Wert der Steilheit als Funktion der Betriebsbedingungen festgelegt wird.

3. Verfahren nach Anspruch 1 oder 2, dadurch gekennzeichnet, dass der eine Steuereingang ein Steuereingang für eine Zündzeitpunkt-Steuervorrichtung ist und dass der andere Steuereingang ein Steuereingang für eine Gemischzusammensetzung-Steuervorrichtung ist.

4. Verfahren nach Anspruch 1 oder 2, dadurch gekennzeichnet, dass der eine Steuereingang ein Steuereingang für eine Einspritzzeit-Steuervorrichtung ist und dass der andere Steuereingang ein Steuereingang für eine Gemischzusammensetzung-Steuervorrichtung ist.

5. Verfahren nach einem der vorausgehenden Ansprüche, dadurch gekennzeichnet, dass die Maschinenausgangsgrösse die Motordrehzahl ist.

6. Verfahren nach einem der vorausgehenden Ansprüche, dadurch gekennzeichnet, dass der Grundwert aus einer Karte abgeleitet wird, die Zeitsteuerdaten als Funktion der Motordrehzahl und der Lastanforderung liefert.

7. Verfahren nach Anspruch 3, dadurch gekennzeichnet, dass die Gemischzusammensetzung-Steuervorrichtung eine Brennstoffeinspritz-Steuervorrichtung ist, die nacheinander getrennt die in jeden Motorzylinder eingespritzte Brennstoffmenge bestimmt, dass der Zündzeitpunktwert nacheinander um einen Grundwert für jeden Zylinder verändert wird, dass die Steilheit der Maschinenausgangsgrösse gegenüber dem Zündzeitpunkt nacheinander für jeden Zylinder bestimmt wird, und dass der in jeden Zylinder eingespritzte Brennstoff derart gesteuert wird, dass für jeden Zylinder der gewünschte Wert der Steilheit erhalten wird.

8. Verfahren nach Anspruch 3, dadurch gekennzeichnet, dass die Zylinder in mindestens zwei Zylindergruppen unterteilt sind, dass die Gemischzusammensetzung-Steuervorrichtung eine Brennstoffeinspritz-Steuervorrichtung ist, die nacheinander getrennt die in jede Zylindergruppe injizierte Brennstoffmenge bestimmt, dass der Zündzeitpunktwert nacheinander um einen Grundwert für jede Zylindergruppe verändert wird, und dass der in jede Zylindergruppe injizierte Brennstoff derart gesteuert wird, dass der gewünschte Wert der Steilheit für jede Zylindergruppe erreicht wird.

9. Verfahren nach Anspruch 3, dadurch gekennzeichnet, dass die Gemischsteuervorrichtung aus mindestens zwei Vergasern gebildet wird, von denen jeder ein Brennstoffgemisch einer jeweiligen Zylindergruppe zuführt, dass der Zündzeitpunktwert nacheinander für jede Zylindergruppe um einen Grundwert verändert wird, dass die Steilheit der Mascheinenausgangsgrösse gegenüber dem Zündzeitpunkt nacheinander für jede Zylindergruppe bestimmt wird und dass das jeder Zylindergruppe zugeführte Brennstoffgemisch derart gesteuert wird, dass für jede Zylindergruppe der gewünschte Wert der Steilheit erhalten wird.

10. Verfahren nach Anspruch 3, dadurch gekennzeichnet, dass die Gemischzusammensetzung-Steuervorrichtung die Zusammensetzung eines Gemisches bestimmt, die einer Gruppe von mindestens zwei Zylindern zugeführt wird, die mindestens einen Teil der Maschine bilden, dass der Zündzeitpunkt nacheinander um einen Grundwert für jeden Zylinder geändert wird, dass die Steilheit der Maschinenausgangsgrösse gegenüber dem Zündzeitpunkt nacheinander für jeden Zylinder der Gruppe bestimmt wird, dass eine Korrektur für den Zündzeitpunkt für jeden Zylinder der Gruppe erzeugt wird, um den gewünschten Wert der Steilheit für jeden Zylinder der Gruppe zu erzielen, dass eine vorgegebene Funktion der Zündzeitpunktkorrekturen berechnet wird, und dass die Zusammensetzung des der Gruppe von Zylindern zugeführten Gemisches derart gesteuert wird, dass die vorgegebene Funktion der Zündzeitpunktkorrekturen verkleinert wird.

11. Verfahren nach einem der Ansprüche 1 bis 3, dadurch gekennzeichnet, dass die Maschine einen weiteren Steuereingang hat und das Verfahren ferner die Überwachung einer weiteren Maschinenausgangsgrösse und die Steuerung des weiteren Eingangs in solcher Weise umfasst, dass ein gewünschter Wert der weiteren Maschinenausgangsgrösse erzielt wird.

12. Verfahren nach Anspruch 3, dadurch gekennzeichnet, dass die Maschine einen weiteren Steuereingang für eine Abgasrückwälz-Steuervorrichtung hat, und das Verfahren ferner die Überwachung des rauhen Laufs der Maschine und die Steuerung des weiteren Eingangs in solcher Weise umfasst, dass ein gewünschter Wert des rauhen Laufs der Maschine erhalten wird.

13. Verfahren nach Anspruch 1, dadurch gekennzeichnet, dass das Verfahren ferner die Steuerung des einen Steuereingangs in solcher Weise umfasst, dass ein gewünschter Wert der Steilheit erhalten wird und dass der eine Steuereingang rascher als der andere Steuereingang geändert wird.

14. Verfahren nach Anspruch 1, dadurch gekennzeichnet, dass das Verfahren ferner die einleitende Korrektur des einen Steuereingangs in solcher Weise umfasst, dass ein gewünschter Wert der Steilheit erhalten wird und dass anschliessend der andere Steuereingang fortschreitend derart gesteuert wird, dass der gewünschte Wert der Steilheit bei behalten wird, während die Korrektur für diesen einen Steuereingang entfällt.

15. Adaptives Steuersystem für eine Brennkraftmaschine (10) mit zwei Steuereingängen, von denen beide einen Parameter der Maschinenausgangsgrösse beeinflussen, das Steuersystem eine Einrichtung (14; 14A; 14B) zur Festlegung eines Grundwertes für einen der Stuereingänge als Funktion der Maschinenbetriebsbedingungen umfasst, eine Einrichtung (17, 18; 17, 18, 39; 18, 47, 45) zur periodischen Veränderung der einen Eingangsgrösse, um den Grundwert, eine Einrichtung (10a) zur Überwachung der Maschinenausgangsgrösse, und eine Einrichtung (19) zur Bestimmung der Steilheit der Maschinenausgangsgrösse gegenüber dem einen Steuereingang, dadurch gekennzeichnet, dass das System ferner eine Einrichtung (20, 21, 22; 20, 38, 21, 22; 20, 21, 22A; 23, 24, 25; 20, 40, 42, 43; 20, 48, 40, 49, 42, 43) zur Steuerung des anderen Steuereingangs in solcher Weise umfasst, dass ein gewünschter Wert der Steilheit erhalten wird.

16. System nach Anspruch 15, dadurch gekennzeichnet, dass das System eine Einrichtung (16; 16B) zur Festlegung der Steilheit als Funktion der Maschinenbetriebsbedingungen umfasst.

17. System nach Anspruch 15 oder 16, dadurch gekennzeichnet, dass das System eine Zündzeitpunkt-Steuervorrichtung (12) aufweist, die auf den einen Steuereingang anspricht, und eine Gemischzusammensetzung-Steuervorrichtung, die auf den anderen Steuereingang anspricht.

18. System nach einem der Ansprüche 15 bis 17, dadurch gekennzeichnet, dass es ferner eine Einrichtung (10a) zur Erfassung der Motordrehzahl und Zuführung eines Ausgangssignals an die Einrichtung (19) zur Bestimmung der Steilheit umfasst, und die Motordrehzahl die Maschinenausgangsgrösse darstellt.

19. System nach Anspruch 17 oder 18, dadurch gekennzeichnet, dass die Gemischzusammensetzung-Steuervorrichtung eine Brennstoffeinspritz-Steuervorrichtung (11) ist.

20. System nach Anspruch 17 oder 18, dadurch gekennzeichnet, dass die Gemischzusammensetzung-Steuervorrichtung ein elektronisch abgestimmter Vergaser ist.

21. System nach Anspruch 17 oder 18, dadurch gekennzeichnet, dass die Gemischzusammensetzung-Steuervorrichtung eine Vorrichtung zur Steuerung der Abgas-Rückwälzung ist.

22. System nach einem der Ansprüche 17 bis 21, dadurch gekennzeichnet, dass es eine Einrichtung (10b) zur Bestimmung der Lastanforderung aufweist, der der Motor unterliegt, und eine Einrichtung (10a, 13) zur Bestimmung der Motordrehzahl, und dass Lastanforderung und Motordrehzahl als die Maschinenbetriebsbedingungen verwendet werden.

23. System nach Anspruch 17, dadurch gekennzeichnet, dass die Gemischzusammensetzung-Steuervorrichtung (11) die nacheinander in jeden Motorzylinder einzuspritzende Brennstoffmenge bestimmt, dass die Einrichtung (17, 18, 39) zur Veränderung des einen Steuereingangs derart angeordnet ist, dass der Zündzeitpunktwert nacheinander für jeden Zylinder um einen Grundwert geändert wird, dass die Einrichtung (19) zur Bestimmung der Steilheit die Steilheit der Maschinenausgangsgrösse relativ zum Zündzeitpunkt nacheinander für jeden Zylinder bestimmt und dass die Einrichtung (20, 38, 21, 22) zur Steuerung des anderen Steuereingangs den in jeden Zylinder eingespritzen Brennstoff derart steuert, dass der gewünschte Wert der Steilheit für jeden Zylinder erzielt wird.

24. System nach Anspruch 17, dadurch gekennzeichnet, dass die Gemischzusammensetzung-Steuervorrichtung mindestens zwei Vergaser umfasst, von denen jeder ein Brennstoffgemisch an eine jeweilige Zylindergruppe liefert, dass die Einrichtung zur Veränderung des einen Steuereingangs derart angeordnet ist, dass der Zündzeitpunktwert nacheinander für jede Zylindergruppe um einen Grundwert geändert wird, dass die Einrichtung zur Bestimmung der Steilheit die Steilheit der Maschinenausgangsgrösse relativ zum Zündzeitpunkt nacheinander für jeden Zylinder bestimmt, und dass die Einrichtung zur Steuerung des anderen Steuereingangs das jeder Zylindergruppe zugeführte Brennstoffgemisch derart steuert, dass der gewünschte Wert der Steilheit für jede Zylindergruppe erzielt wird.

25. System nach Anspruch 14, dadurch gekennzeichnet, dass es ferner eine Steuereinrichtung (411) für die Abgasrückwälzung enthält, die auf ein weiteres Steuereingangssignal anspricht, eine Einrichtung (519) zur Überwachung des rauhen Ganges der Maschine, und eine Einrichtung (520, 521, 522) zur Steuerung des weiteren Eingangs in solcher Weise, um einen gewünschten Wert des rauhen Laufs der Maschine zu erhalten.

**Revendications**

1. Procédé permettant de commander un moteur à combustion interne ayant deux entrées de commande affectant toutes les deux un paramètre de puissance du moteur, ledit procédé comprenant la perturbation périodique d'une desdites entrées autour d'une valeur de base qui est établie en fonction des conditions de fonctionnement du moteur, la surveillance de ladite puissance du moteur, et la détermination de la courbe de la puissance du moteur par rapport à cette entrée, caractérisé en ce que le procédé comprend en outre la commande de l'autre entrée de manière à obtenir une valeur désirée de ladite courbe.

2. Procédé selon la revendication 1, caractérisé en ce que ladite valeur désirée de ladite courbe est établie en fonction des conditions de fonctionnement.

3. Procédé selon la revendication 1 ou la revendication 2, caractérisé en ce qu'une desdites entrées est une entrée de commande pour un dispositif de commande de synchronisation d'allumage et en ce que ladite autre entrée est une entrée de commande pour un dispositif de commande de composition de mélange.

4. Procédé selon la revendication 1 ou la revendication 2, caractérisé en ce qu'une desdites entrées est une entrée de commande pour un dispositif de commande de synchronisation de l'injection et en ce que ladite autre entrée est une entrée de commande pour un dispositif de commande pour la composition du mélange.

5. Procédé selon l'une des revendications précédentes, caractérisé en ce que ladite puissance du moteur est la vitesse du moteur.

6. Procédé selon l'une des revendications précédentes, caractérisé en ce que ladite valeur de base est dérivée d'une table fournissant des données de synchronisation en fonction de la vitesse du moteur et de la sollicitation en charge.

7. Procédé selon la revendication 3, caractérisé en ce que le dispositif de commande de la composition du mélange est un dispositif de commande de l'injection de carburant qui détermine séparément la qunatité de carburant injectée tour à tour dans chaque cylindre du moteur, en ce que la valeur de synchronisation de l'allumage est perturbée autour de la valeur de base pour chaque cylindre tour à tour, en ce que la courbe de la puissance du moteur par rapport à la synchronisation de l'allumage est déterminée tour à tour pour chaque cylindre, et en ce que le carburant injecté dans chaque cylindre est commandé de manière à atteindre la valeur désirée de ladite courbe pour chaque cylindre.

8. Procédé selon la revendication 3, caractérisé en ce que les cylindres sont groupés en au moins deux jeux de cylindres, en ce que le dispositif de commande de la composition du mélange est un dispositif de commande d'injection du carburant qui détermine séparément la quantité de carburant injectée dans chaque jeu de cylindres tour à tour, en ce que la valeur de synchronisation de l'allumage est perturbée autour d'une valeur de base pour chaque jeu de cylindres tour à tour, et en ce que le carburant injecté dans chaque jeu de cylindres est commandé de manière à atteindre la valeur désirée de ladite courbe pour chaque jeu de cylindres.

9. Procédé selon la revendication 3, caractérisé en ce que le dispositif de commande du mélange se compose d'au moins deux carburateurs fournissant chacun un mélange de carburant à un jeu de cylindres correspondant, en ce que la valeur de synchronisation de l'allumage est perturbée autour d'une valeur de base pour chaque jeu de cylindres tour à tour, en ce que la courbe de la puissance du moteur par rapport à la synchronisation de l'allumage est déterminée pour chaque jeu de cylindres tour à tour, et en ce que le mélange de carburant fourni à chaque jeu de cylindres est commandé de manière à atteindre la valeur désirée de la courbe pour chaque jeu de cylindres.

10. Procédé selon la revendication 3, caractérisé en ce que le dispositif de commande de la composition du mélange détermine la composition du mélange fourni à un jeu d'au moins deux cylindres formant au moins une partie du moteur, en ce que la synchronisation de l'allumage est perturbée autour d'une valeur de base pour chaque cylindre du jeu tour à tour, en ce que la courbe de la puissance du moteur par rapport à la synchronisation de l'allumage est déterminée pour chaque cylindre du jeu tour à tour, en ce qu'on réalise une correction à la synchronisation de l'allumage pour chaque cylindre du jeu de manière à atteindre la valeur désirée de ladite courbe pour chaque cylindre du jeu, en ce qu'une fonction prédéterminée des corrections de la synchronisation de l'allumage est calculée, et en ce que la composition du mélange fourni au jeu de cylindres est contrôlée de manière à réduire ladite fonction prédéterminée des corrections de la synchronisation de l'allumage.

11. Procédé selon l'une des revendications 1 à 3, caractérisé en ce que le moteur a une entrée de commande supplémentaire, ledit procédé comprenant en outre la surveillance d'une puissance de moteur supplémentaire dudit moteur et la commande de ladite entrée supplémentaire de manière à atteindre une valeur désirée de ladite puissance de moteur supplémentaire.

12. Procédé selon la revendication 3, caractérisé en ce que le moteur a une entrée de commande supplémentaire pour un dispositif de commande de remise en circulation des gaz d'échappement, ledit procédé comprenant en outre la surveillance de la dureté dudit moteur et la commande de ladite entrée supplémentaire de manière à atteindre une valeur souhaitée de dureté du moteur.

13. Procédé selon la revendication 1, caractérisé en ce que le procédé comprend en outre la commande de l'une desdites entrées de manière à obtenir une valeur désirée de ladite courbe, ladite entrée étant modifiée plus rapidement que ladite autre entrée.

14. Procédé selon la revendication 1, caractérisé en ce que le procédé comprend en outre la correction initiale de l'une desdites entrées de manière à obtenir une valeur désirée de ladite courbe, puis la commande progressive de ladite autre entrée de manière à maintenir ladite valeur désirée de ladite courbe tout en retirant la correction à la première entrée.

15. Système de commande adaptative pour un moteur à combustion interne (10) ayant deux entrées de commandes qui affectent toutes les deux un paramètre de la puissance du moteur, ledit système comprenant des moyens (14; 14A; 14B) pour établir une valeur de base pour une desdites entrées en fonction des conditions de fonctionnement du moteur, des moyens (17, 18; 17, 18, 39; 18, 47, 45) pour perturber périodiquement une des dites entrées autour de ladite valeur de base, des moyens (10a) pour surveiller ladite puissance du moteur, des moyens (19) pour déterminer la courbe de la puissance du moteur par rapport à cette première entrée, caractérisé en ce que le système comprend en outre des moyens (20, 21, 22; 20, 38, 21, 22, 22A; 23, 24, 25; 20, 40, 42, 43; 20, 48, 40, 49, 42, 43) pour commander l'autre entrée afin d'obtenir une valeur désirée de ladite courbe.

16. Système selon la revendication 15, caractérisé en ce que le système comprend des moyens (16; 16B) pour établir ladite courbe en fonction desdites conditions de fonctionnement du moteur.

17. Système selon la revendication 15 ou la revendication 16, caractérisé en ce que le système comprend un dispositif de commande de la synchronisation de l'allumage (12) réagissant à l'une desdites entrées de commande, et un dispositif de commande de la composition du mélange (11) réagissant à l'autre desdites entrées de commandes.

18. Système selon l'une des revendications 15 à 17, caractérisé en ce que le système comprend en outre des moyens (10a) pour détecter la vitesse du moteur et fournir un signal de sortie auxdits moyens de détermination de courbe (19), la vitesse du moteur représentant la puissance du moteur.

19. Système selon la revendication 17 ou la revendication 18, caractérisé en ce que le dispositif de commande de la composition du mélange est un dispositif de commande de l'injecteur de carburant (11).

20. Système selon la revendication 17 ou la revendication 18, caractérisé en ce que le dispositif de commande de la composition du mélange est un carburateur équilibré électroniquement.

21. Système selon la revendication 17 ou la revendication 18, caractérisé en ce que le dispositif de commande de la composition du mélange est un dispositif pour la commande de la remise en circulation des gaz d'échappement.

22. Système selon l'une des revendications 17 à 21, caractérisé en ce que le système comprend des moyens (10b) pour déterminer la sollicitation en charge à laquelle est soumis le moteur, et des moyens (10a, 13) pour déterminer la vitesse du moteur, la sollicitation en charge et la vitesse du moteur utilisées pour lesdites conditions de fonctionnement du moteur.

23. Système selon la revendication 17, caractérisé en ce que le dispositif de commande de la composition du mélange (11) détermine la quantité de carburant injectée dans chaque cylindre du moteur tour à tour, en ce que lesdits moyens (17, 18, 39) pour perturber l'une desdites entrées sont prévus pour perturber la valeur de synchronisation de l'allumage, en ce que lesdits moyens de détermination de courbe (19) déterminent la courbe de la puissance du moteur par rapport à la synchronisation de l'allumage pour chaque cylindre tour à tour, et en ce que lesdits moyens (20, 38, 21, 22) commandant l'autre entrée commandent le carburant injecté dans chaque cylindre de manière à atteindre la valeur désirée de ladite courbe pour chaque cylindre.

24. Système selon la revendication 17, caractérisé en ce que le dispositif de commande de la composition du mélange comprend au moins deux carburateurs fournissant chacun un mélange de carburant à un jeu correspondant de cylindres, en ce que lesdits moyens pour perturber l'une desdites entrées sont prévus pour perturber la valeur de synchronisation d'allumage autour d'une valeur de base pour chaque jeu de cylindres tour à tour, en ce que lesdits moyens de détermination de courbe déterminent la courbe de la puissance du moteur par rapport à la synchronisation de l'allumage de chaque cylindre tour à tour, et en ce que lesdits moyens pour la commande de l'autre entrée commandent le mélange de carburant fourni à chaque jeu de cylindres de manière à atteindre la valeur désirée de la courbe pour chaque jeu de cylindre.

25. Système selon la revendication 14, caractérisé en ce que le système comprend en outre un dispositif de commande de la remise en circulation des gaz d'échappement (411) réagissant à un signal de commande d'entrée supplémentaire, des moyens (519) pour surveiller la dureté du moteur, et des moyens (520, 521, 522) pour commander ladite entrée supplémentaire de manière à obtenir une valeur désirée de dureté du moteur.

FIG.I.

FIG.2.

IGNITION ADVANCE ANGLE

AIR/FUEL RATIO [CONSTANT AIR FLOW]

FIG.3.

FIG.6.

FIG.5.

FIG. 4.

FIG.7.

FIG.8.

FIG.9.

6

FIG.10.

FIG.II.